# EUROPÄISCHE PATENTSCHRIFT

(11) **EP 3 425 442 B1**
(45) Veröffentlichungstag und Bekanntmachung des Hinweises auf die Patenterteilung: **08.01.2020**
(21) Anmeldenummer: 18179495.9
(22) Anmeldetag: 25.06.2018
(51) Int. Cl.: B60Q 9/00, B60R 1/00, G05D 1/02, H04N 7/18, G02B 27/01, G08G 1/16, G06K 9/00, B60W 50/14, G01C 21/36

(54) **VERFAHREN UND VORRICHTUNG ZUM ANREICHERN EINES SICHTFELDES EINES FAHRERS EINES FAHRZEUGES MIT ZUSATZINFORMATIONEN, VORRICHTUNG ZUR VERWENDUNG IN EINEM BEOBACHTER-FAHRZEUG SOWIE KRAFTFAHRZEUG**
METHOD FOR ENRICHING A FIELD OF VIEW OF A DRIVER OF A VEHICLE WITH ADDITIONAL INFORMATION, DEVICE FOR USE IN AN OBSERVERS' VEHICLE AND MOTOR VEHICLE
PROCÉDÉ D'ENRICHISSEMENT D'UN CHAMP DE VISION D'UN CONDUCTEUR D'UN VÉHICULE AVEC DES INFORMATIONS ADDITIONNELLES, DISPOSITIF D'UTILISATION DANS UN VÉHICULE OBSERVATEUR, AINSI QUE VÉHICULE AUTOMOBILE

(30) Priorität: 03.07.2017 DE 102017211244
(43) Veröffentlichungstag der Anmeldung: 09.01.2019
(73) Patentinhaber: VOLKSWAGEN AKTIENGESELLSCHAFT, 38440 Wolfsburg (DE)
(72) Erfinder: Haar, Adrian, 38448 Wolfsburg (DE); Kleen, Andro, 38100 Braunschweig (DE); Schewe, Frederik, 38104 Braunschweig (DE); Wyszka, Robert Jan, 30169 Hannover (DE); Gurka, Daniel, 30163 Hannover (DE)

(56) Entgegenhaltungen:
- DE-A1- 10 131 720
- DE-A1- 10 257 484
- DE-A1-102014 000 935
- DE-B3-102012 002 149
- DE-B3-102012 002 149
- DE-B4-112009 004 342

## Beschreibung

Der Vorschlag betrifft das technische Gebiet von Fahrerinformationssystemen, die auch unter dem Begriff Infotainmentsystem bekannt sind. Dabei geht es im Besonderen um ein Verfahren zum Anreichern eines Sichtfeldes eines Fahrers eines Fahrzeuges mit Zusatzinformationen. Solche Systeme werden vor allem in Fahrzeugen eingesetzt. Der Vorschlag betrifft weiterhin eine entsprechend ausgelegte Vorrichtung zur Verwendung in einem Beobachter-Fahrzeug und eine entsprechend ausgelegte Vorrichtung zur Verwendung in einem Objekt, sowie ein Kraftfahrzeug.

Zur Zeit wird intensiv an Technologien gearbeitet, die später ein autonomes Fahren ermöglichen sollen. Ein erster Ansatz ist dabei den Fahrer nicht komplett von seinen Aufgaben zu entlasten, sondern, der Fahrer kann jederzeit die Steuerung des Fahrzeuges übernehmen und nimmt außerdem Überwachungsfunktionen wahr. Durch neuere Technologien im Bereich der Fahrerinformationssysteme wie Head-Up Display HUD ist es möglich den Fahrer besser über das Geschehen im Umfeld seines Fahrzeuges zu informieren. Auch andere Anzeigen werden zu diesem Zweck eingesetzt, etwa ein freiprogrammierbares Kombiinstrument, welches im Armaturenbrett positioniert ist.

Für die nahe Zukunft ist deshalb davon auszugehen, dass systemseitig durch den Einsatz neuerer Technologien (Fahrzeug-zu-Fahrzeug-Kommunikation, Einsatz von Datenbanken, Fahrzeugsensorik, etc.) umfassende Informationen über Objekte (insb. Fahrzeuge) im direkten Umfeld des eigenen Fahrzeugs verfügbar sein werden. Im Bereich Fahrzeugsensorik werden insbesondere die folgenden Komponenten genannt, die eine Umfeldbeobachtung ermöglichen: RADAR-Geräte entsprechend Radio Detection and Ranging, LIDAR-Geräte, entsprechend Light Detection and Ranging, hauptsächlich für den Bereich Abstandserfassung / -warnung und Kameras mit entsprechender Bildverarbeitung für den Bereich der Objekterkennung. Diese Daten über die Umwelt können somit als Basis für systemseitige Fahrempfehlungen, Warnungen, etc. herangezogen werden. Beispielsweise sind so Anzeigen / Warnungen darüber denkbar, in welche Richtung (möglicherweise in die eigene Trajektorie) ein anderes, umgebendes Fahrzeug abbiegen will.

Die Fahrzeug-zu-Fahrzeug-Kommunikation ist mittlerweile auch mittels Mobilkommunikation mit Systemen wie LTE entsprechend Long Term Evolution möglich. Hier wurde von der Organisation 3GPP eine Spezifikation mit Namen LTE V2X verabschiedet. Als Alternative stehen auf WLAN-Technologie beruhende Systeme für die Fahrzeug-Direktkommunikation zur Verfügung, insbesondere das System nach WLAN p.

Der Begriff "autonomes Fahren" wird in der Literatur teilweise unterschiedlich benutzt.

Zur Klärung dieses Begriffs wird deshalb hier noch folgender Einschub präsentiert. Unter autonomem Fahren (manchmal auch automatisches Fahren, automatisiertes Fahren oder pilotiertes Fahren genannt) ist die Fortbewegung von Fahrzeugen, mobilen Robotern und fahrerlosen Transportsystemen zu verstehen, die sich weitgehend autonom verhalten. Es gibt verschiedene Abstufungen des Begriffs autonomes Fahren. Dabei wird auf bestimmten Stufen auch dann von autonomen Fahren gesprochen, wenn noch ein Fahrer im Fahrzeug befindlich ist, der ggfs. nur noch die Überwachung des automatischen Fahrvorgangs übernimmt. In Europa haben die verschiedenen Verkehrsministerien (in Deutschland war die Bundesanstalt für Straßenwesen beteiligt) zusammengearbeitet und die folgenden Autonomiestufen definiert.
- Level 0: "Driver only", der Fahrer fährt selbst, lenkt, gibt Gas, bremst etc.
- Level 1: Bestimmte Assistenzsysteme helfen bei der Fahrzeugbedienung (u.a. ein Abstandsregelsystem - Automatic Cruise Control ACC).
- Level 2: Teilautomatisierung. U.a. automatisches Einparken, Spurhaltefunktion, allgemeine Längsführung, beschleunigen, abbremsen etc. werden von den Assistenzsystemen übernommen (u.a. Stauassistent).
- Level 3: Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert die Führung zu übernehmen. Diese Form der Autonomie ist auf Autobahnen technisch machbar. Der Gesetzgeber arbeitet darauf hin, Level 3-Fahrzeuge zuzulassen. Die gesetzlichen Rahmenbedingungen wurden dafür bereits geschaffen.
- Level 4: Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.
- Level 5: Kein Fahrer erforderlich. Außer dem Festlegen des Ziels und dem Starten des Systems ist kein menschliches Eingreifen erforderlich.

Automatisierte Fahrfunktionen ab Stufe 3 nehmen dem Fahrer die Verantwortung für die Steuerung des Fahrzeugs ab.

Aufgrund der derzeitigen Entwicklung hin zu höheren Autonomiestufen, wo aber viele Fahrzeuge nach wie vor noch vom Fahrer gesteuert werden, ist davon auszugehen, dass entsprechende zusätzliche Informationen mittelfristig bereits für manuell geführte Fahrzeuge, und nicht erst langfristig für hochautomatisierte Systeme, genutzt werden können.

Für die Fahrer-Fahrzeug-Interaktion stellt sich hierbei die Frage, wie diese Informationen so dargestellt werden können, dass ein echter Mehrwert für den menschlichen Fahrer entsteht und er die bereitgestellten Informationen auch schnell, respektive intuitiv verorten kann. Folgende Lösungen in diesem Bereich sind dabei schon aus dem Stand der Technik bekannt.

Aus der DE 10 2008 046 038 A1 ist eine Bildanzeigevorrichtung bekannt, die ein virtuelles Bild durch Projektion eines Bildes auf eine Windschutzscheibe eines Fahrzeuges anzeigt. Weiterhin ist ein Hindernisdetektor enthalten, der ein um das Fahrzeug herum befindliches Hindernis erfasst. Eine Sicherheitsbestimmungseinheit ist vorhanden, die eine Sicherheit des Fahrzeugs bezüglich des erfassten Hindernisses auf der Grundlage eines Abstandes zum Hindernis und/oder einer relativen Geschwindigkeit des Fahrzeugs zum Hindernis bestimmt. Die Anzeigevorrichtung weist ferner eine Bildsteuereinheit auf, die eine Position des virtuellen Bildes derart steuert, dass dieses das Hindernis in einem Blickfeld eines Fahrers umkreist, wenn die Sicherheitsbestimmungseinheit bestimmt, dass das Hindernis die Fahrsicherheit gefährdet.

Aus der DE 10 2012 000 949 A1 ist ein Verfahren bekannt, dass zum Warnen des Fahrers eines Kraftfahrzeugs vor einer Kollisionsgefahr dient. Dabei wird eine zeitliche Sequenz von Bildern eines Umgebungsbereichs des Kraftfahrzeugs mittels einer Kamera eines Kollisionswarnungssystems aufgenommen, und es wird ein in dem Umgebungsbereich befindliches weiteres Fahrzeug in den aufgenommenen Bildern mittels einer Recheneinrichtung des Kollisionswarnungssystems erkannt. Anhand der zeitlichen Sequenz von Bildern wird mittels der Recheneinrichtung ein aktueller Zustand zumindest eines Leuchtmittels des weiteren Fahrzeugs bestimmt. In Abhängigkeit von dem aktuellen Zustand des Leuchtmittels wird dann durch die Recheneinrichtung entschieden, ob der Fahrer gewarnt werden muss oder nicht.

Aus der DE 10 2015 202 095 A1 ist ein Verfahren zum Vorhersagen des Verhaltens von wenigstens einem vorausfahrenden Fahrzeug, bekannt. Ein Fahrer des Eigenfahrzeugs kann insbesondere vor einem möglichen Einscheren des vorausfahrenden Fahrzeugs gewarnt oder informiert werden, z. B. durch eine Benachrichtigung auf einer Armatur oder auf einem Head-Up Display des Eigenfahrzeugs oder durch ein akustisches Warnsignal oder ein haptisches Warnsignal (z. B. Vibrieren des Lenkrads, Vibrieren der Bremse, usw.) oder durch eine Kombination daraus. Eine Vorhersageeinheit berechnet eine bestimmte Wahrscheinlichkeit, mit der das vorausfahrende Fahrzeug einscheren wird und führt bei Überschreiten gewisser Werte die Warnung oder sogar ein Abbremsen durch.

Aus der DE 10 2012 002 149 B3 ist es bekannt, bei einem Fahrzeug ein von einer Kamera erfasstes Bild anzuzeigen. Das von der Kamera erfasste Objekt kann durch einen farbigen Rahmen um das Objekt hervorgehoben werden.

Aus der DE 102 57 484 A1 ist der Einsatz von RADAR und LIDAR-Sensoren in Fahrzeugen zur Erfassung von relevanten Objekten bekannt. Die Objekte können auf einem Head-Up Display angezeigt werden. Durch eine blinkende Darstellung kann das Objekt optisch hervorgehoben werden.

Aus der DE 11 2009 004 342 B4 ist es bekannt, über eine Car-to-Car-Kommunikation Bewegungszustandsinformationen von einem anderen Fahrzeug samt dem Zustand seines Blinkers zu empfangen.

Aus der DE 10 2014 000 935 A1 ist es bekannt, relevante Objekte von einem Fahrzeug aus zu beleuchten. Dies kann auch blinkend erfolgen.

Aus der DE 101 31 720 A1 ist es bekannt, zusätzlich zu einem Fußgänger auch ein separates Gefahrensymbol auf einem Head-Up Display anzuzeigen.

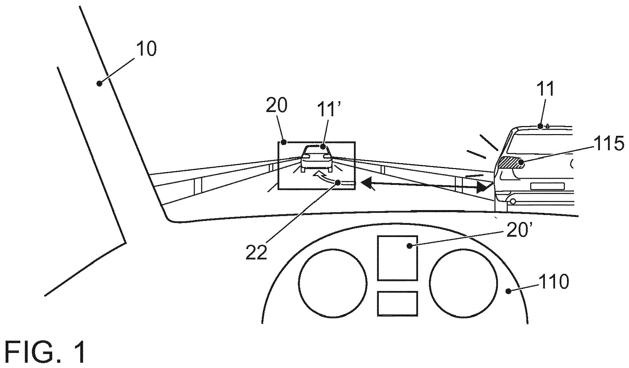

Die bekannten Lösungen sind mit einem Nachteil behaftet. Dies wurde im Rahmen der Erfindung erkannt. Bei den bekannten Lösungen besteht das Problem, dass die zusätzlichen Anzeigen (HUD oder Kombiinstrument) räumlich begrenzt sind. Sie decken aus Sicht des Fahrers nur einen kleinen Teil seines Sichtfeldes ab, weshalb die visuelle Verknüpfung von dargestellten Informationen mit korrespondierenden, interagierenden Verkehrsteilnehmern nicht immer unmittelbar möglich ist. Auf der Anzeige kann mit den bereits erwähnten Technologien zur Umfeldbeobachtung heute schon dargestellt werden, in welche Richtung ein Fahrzeug abbiegen will. Um welches Fahrzeug es sich dabei aus Sicht des Fahrers allerdings genau handelt, kann je nach Position dieses Fahrzeuges nicht unmittelbar visualisiert werden. Fig. 1 illustriert diese Problematik.

Wie dennoch eine für den Fahrer intuitiv verständliche Verbindung zwischen der Anzeige und dem korrespondierenden Objekt in der Umwelt geschaffen werden kann, ist Aufgabe der Erfindung.

Diese Aufgabe wird durch ein Verfahren zum Anreichern eines Sichtfeldes eines Fahrers eines Fahrzeuges mit Zusatzinformationen gemäß Anspruch 1, eine Vorrichtung zur Verwendung in einem Beobachter-Fahrzeug gemäß Anspruch 8 sowie ein Kraftfahrzeug gemäß Anspruch 13 gelöst.

Die abhängigen Ansprüche beinhalten vorteilhafte Weiterbildungen und Verbesserungen der Erfindung entsprechend der nachfolgenden Beschreibung dieser Maßnahmen.

Der Vorschlag betrifft ein Verfahren zum Anreichern des Sichtfeldes eines Fahrers eines Fahrzeuges mit Zusatzinformationen, bei dem die Zusatzinformationen über eine Anzeigeeinheit, insbesondere ein Head-Up Display dargestellt werden. Bei dem Verfahren erfolgt eine Umfeldbeobachtung des Fahrzeuges. Wenn seitens der Umfeldbeobachtung ein relevantes Objekt mit einem Bedeutungspotential erkannt wurde, wird das relevante Objekt auf der Anzeigeeinheit dargestellt und der Zusammenhang zum realen Objekt im Sichtfeld des Fahrers wird dadurch betont, dass das dargestellte Objekt umweltsynchron zu dem realen Objekt optisch hervorgehoben wird.

Der Grundgedanke der umweltsynchronen Hervorhebung von Elementen besteht dabei darin die auf einer Anzeigeeinheit angezeigten Elemente, hinsichtlich von Darstellungsfrequenzen/Taktraten der Umwelt (Lichter bzw. Anzeigen an anderen Fahrzeugen oder Infrastrukturen) zu adaptieren. Folglich werden die im Kfz angezeigten Zusatzinformationen in gleicher, synchroner Frequenz betont, wie das entsprechende Objekt (Lichter bzw. Anzeigen an anderen Fahrzeugen, Infrastrukturen oder Ähnlichem) in der Umwelt für den Fahrzeugführer sichtbar ist. Durch die Umwelt-synchrone Anzeige von HUD-Inhalten wird die Verknüpfung zum korrespondierenden Objekt im Umfeld des Fahrzeuges verdeutlicht. Dem Fahrer wird intuitiv klar, auf welches Objekt im Fahrzeugumfeld sich die auf dem HUD angezeigte Zusatzinformation bezieht.

In dem häufigen Fall, dass das mit der Umfeldbeobachtung erkannte relevante Objekt ein Fahrzeug betrifft, und das Fahrzeug mit einer aktivierten Blinkleuchte ankündigt, dass die Absicht besteht die Fahrspur zu wechseln, ist es vorteilhaft, wenn das dargestellte Objekt ebenfalls blinkend dargestellt wird, wobei der Blinkvorgang vorzugsweise synchron zu dem Blinkvorgang des realen Objektes erfolgt.

Zusätzlich ist es von Vorteil, wenn eine von der Umfeldbeobachtung vorausberechnete Trajektorie für das relevante Objekt auf der Anzeigeeinheit dargestellt wird. Das kann für ein Fahrzeug in Form eines Abbiege- oder Einbiegepfeils oder in anderer Form geschehen.

Hier kann eine weitere Betonung dadurch erfolgen, dass die dargestellte Trajektorie auch synchron blinkend dargestellt wird oder statt des dargestellten Objektes die dargestellte Trajektorie des Objektes synchron blinkend dargestellt wird.

Für die Realisierung der Umfeldbeobachtung ist es von Vorteil, wenn eine oder mehrere Kameras und/oder ein RADAR- oder LIDAR-Sensor dafür eingesetzt werden, die eine Sequenz von Bildern aufnehmen, und bei den aufgenommenen Bildern eine Objekterkennung durchgeführt wird. Es können gängige Methoden zur Objekterkennung durch verschiedene Algorithmen der Bildauswertung eingesetzt werden, die sich mit Mikrorechnern, z.B. in einem Board-Computer des Fahrzeuges realisieren lassen.

Hierbei ist es, vorteilhaft, wenn durch die Algorithmen der Bildauswertung eine Anzahl Bilder ausgewertet werden um bei einem erkannten blinkenden/pulsierenden Objekt die Blinkfrequenz und/oder Phase zu ermitteln. Dies ist von Vorteil für allgemeine blinkende oder pulsierende Objekte auch Infrastrukturobjekte, bei denen die Blinkfrequenz nicht festgelegt ist, oder bei denen eine variable Blinkfrequenz möglich ist.

Für das Verfahren kann es noch von Vorteil sein, wenn dem Beobachter-Fahrzeug die Blinkfrequenz und/oder die Phase des Blinkvorgangs bei dem erkannten Fahrzeug über eine Fahrzeug-zu-Fahrzeug-Kommunikation in einer oder mehreren Umwelt-Synchronisations-Botschaften mitgeteilt wird. In dem Fall ist die Bildauswertung vereinfacht und es muss nur noch eine Objekterkennung erfolgen.

Ein wichtiger Sonderfall besteht noch darin, dass es sich bei dem erkannten Objekt um ein lebendes Tier oder ein anderes Objekt am Straßenrand handelt Eigenbeleuchtung oder Blinklicht. In dem Fall erfolgt eine optische Betonung des realen Objektes dadurch, dass das Objekt mittels einer Beleuchtungseinrichtung des Fahrzeuges blinkend oder pulsierend angestrahlt wird. So wird die umweltsynchrone Darstellung solcher Objekte ermöglicht.

Für eine Vorrichtung zur Verwendung in einem Beobachter-Fahrzeug bei dem Verfahren ist es von Vorteil, dass eine Anzeigeeinheit auf der die Zusatzinformationen dargestellt werden sollen vorgesehen ist, und eine oder mehrere Kameras oder ein RADAR- oder LIDAR-Sensor zur Umfeldbeobachtung, sowie eine Recheneinheit zur Auswertung einer Anzahl von Kamerabildern zur Objekterkennung und zur Einblendung des erkannten Objektes auf der Anzeigeeinheit, wenn festgestellt wurde, dass das erkannte Objekt ein Bedeutungspotential darstellt. Dabei berechnet die Recheneinheit die Einblendung so, dass der Zusammenhang zum realen Objekt im Sichtfeld des Fahrers dadurch betont wird, dass das dargestellte Objekt umweltsynchron zu dem realen Objekt optisch hervorgehoben wird.

Weiterhin vorteilhaft ist es, wenn die Vorrichtung ein Kommunikationsmodul aufweist, über das der Vorrichtung die Blinkfrequenz und/oder die Phase des Blinkvorgangs bei dem erkannten Fahrzeug über eine Fahrzeug-zu-Fahrzeug-Kommunikation in einer oder mehreren Umwelt-Synchronisations-Botschaften mitgeteilt wird. Dies hat den Vorteil, dass die Bildauswertung in dem Beobachter-Fahrzeug sich vereinfacht, so dass nur noch eine Objekterkennung erfolgen muss.

Eine vorteilhafte Maßnahme besteht noch darin, dass die Vorrichtung eine Beleuchtungsvorrichtung ansteuert, um eine optische Betonung des realen Objektes dadurch zu bewirken, dass das Objekt mittels der Beleuchtungsvorrichtung blinkend oder pulsierend angestrahlt wird. Dies ist von Vorteil für den Fall, dass es sich bei dem erkannten Objekt um ein lebendes Tier oder ein Objekt ohne Blinkbeleuchtung oder entsprechendes Anzeigepanel handelt.

Für eine Vorrichtung zur Verwendung in einem Objekt bei dem erfindungsgemäßen Verfahren gilt Folgendes: Wenn das Objekt mit einem Blinklicht oder eine Anzeigeeinheit sowie einem Kommunikationsmodul und einer Recheneinheit ausgestattet ist, ist es von Vorteil, wenn die Recheneinheit so ausgelegt ist, dass sie zur umweltsynchronen Hervorhebung des in einem Beobachterfahrzeug dargestellten Objektes eine oder mehrere Umwelt-Synchronisationsbotschaften an das Beobachterfahrzeug sendet, in der es die Blinkfrequenz und/oder die Phase des Blinkvorgangs der Beleuchtung oder der Anzeigeeinheit des Objektes mitteilt.

Ein Ausführungsbeispiel der Erfindung ist in den Zeichnungen dargestellt und wird nachfolgend anhand der Figuren näher erläutert.

Es zeigen:
- Fig. 1: das Sichtfeld des Fahrers eines Fahrzeuges während der Fahrt;
- Fig. 2: das Cockpit eines Fahrzeuges mit verschiedenen Anzeigeeinheiten als Teil eines Infotainment-Systems
- Fig. 3: das Blockschaltbild des Infotainment-Systems des Fahrzeuges;
- Fig. 4: ein erstes Beispiel einer Umfeldbeobachtung des Fahrzeuges und die daraus resultierende Einblendung von Zusatzinformationen mit Hilfe einer Head-Up-Anzeigeeinheit des Infotainment-Systems;
- Fig. 5: ein Beispiel des zeitlichen Verlaufs einer umweltsynchronen Darstellung eines erkannten vorausfahrenden Fahrzeuges mit Hilfe der Head-Up-Anzeigeeinheit; und
- Fig. 6: ein zweites Beispiel einer Umfeldbeobachtung des Fahrzeuges und die daraus resultierende Einblendung von Zusatzinformationen mit Hilfe der Head-Up-Anzeigeeinheit des Infotainment-Systems.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

Fig. 1 zeigt das Sichtfeld des Fahrers eines Fahrzeuges 10, der im Cockpit des Fahrzeuges 10 sitzt, und das Fahrzeug steuert. Bei dem Fahrzeug 10 handelt es sich als Beispiel um einen Personenkraftwagen Pkw. Die dargestellte Fahrsituation entspricht der typischen Situation bei der Fahrt auf einer Kraftfahrstraße oder Autobahn, wo ein anderes Fahrzeug 11 auf dem Beschleunigungsstreifen der Fahrbahn fährt und der Fahrer des anderen Fahrzeuges auf die Kraftfahrstraße oder Autobahn auffahren möchte. Bei dem anderen Fahrzeug 11 handelt es sich ebenfalls um einen Pkw. Der Fahrer des anderen Fahrzeuges 11 zeigt seinen Auffahrwunsch durch Einschalten des Fahrtrichtungsanzeigers, in dem Fall für die linke Fahrzeugseite, an. Im Folgenden wird der Fahrtrichtungsanzeiger kurz als Blinker oder Blinkleuchte bezeichnet. Die Blinkleuchte ist in Fig. 1 mit der Bezugszahl 115 versehen. Im Sichtfeld des Fahrers des Fahrzeuges 10 befindet sich schon das andere Fahrzeug 11, das aber noch auf dem Beschleunigungsstreifen rechts neben der eigenen Fahrspur unterwegs ist. Die Leuchtphase der Blinkleuchte ist in Fig. 1 durch entsprechende Lichtstrahlen angedeutet. Noch im Sichtfeld des Fahrers des Fahrzeuges 10 befindet sich auch das Kombiinstrument 110 welches im Armaturenbrett des Fahrzeuges angebracht ist. Das Fahrzeug 10 ist mit Head-Up-Display HUD ausgestattet. Dieses erzeugt ein Bild welches auf die Windschutzscheibe des Fahrzeuges 10 projiziert wird. Das Bild wird so projiziert, dass es von dem Fahrer so wahrgenommen wird, als sei das Bild auf eine Leinwand einige Meter vor dem Fahrzeug projiziert. Dabei erscheint das projizierte Bild halbdurchlässig. Der Fahrer sieht also noch was im Bereich des Bildes auf der Straße passiert. Das Bild zeigt eine Darstellung des vorausfahrenden Fahrzeuges 11. Ebenfalls dargestellt ist ein eine Trajektorie 22. Die Trajektorie 22 entspricht einen Abbiege oder Einbiegepfeil, wie er auch von entsprechenden Anzeigen von Navigationssystemen bekannt ist. Mit dem Einblenden des dargestellten Fahrzeuges 11' und der Trajektorie 22 soll dem Fahrer bedeutet werden, dass er sich darauf einstellen kann, dass ein Fahrzeug im Begriff ist seinen Weg zu kreuzen und also eine entsprechende Vorsicht geboten ist. Bei dieser Form der Darstellung ist es insbesondere, wenn mehrere Fahrzeuge im Sichtfeld sind, aber für den Fahrer nicht ganz ersichtlich, welches Fahrzeug mit Trajektorie 22 gemeint ist. Was fehlt, ist eine optische Verknüpfung des dargestellten Fahrzeuges 11' mit einem im Sichtfeld auftauchenden Fahrzeug 11. Statt der Einblendung der Zusatzinformationen nur durch das HUD 20 kann alternativ oder zusätzlich eine Einblendung der Zusatzinformationen auf einer Anzeigeeinheit 22' des Kombiinstrumentes erfolgen.

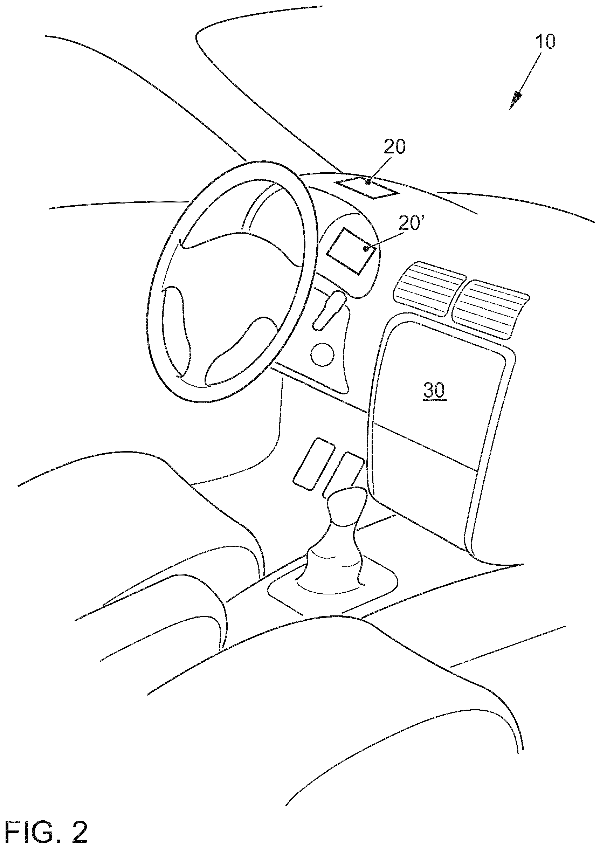

Fig. 2 zeigt das Cockpit des Fahrzeuges 10. Dargestellt ist ein Personenkraftwagen Pkw. Als Fahrzeug kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Motorräder, Schienenfahrzeuge, usw. Der Einsatz der Erfindung wäre allgemein bei Landfahrzeugen, Schienenfahrzeugen, Wasserfahrzeugen und Luftfahrzeugen einsetzbar.

In dem Cockpit sind drei Anzeigeeinheiten eines Infotainmentsystems dargestellt. Es handelt sich um das Head-Up-Display 20, die Zusatzanzeigeeinheit 20' des Kombiinstrumentes 110 und einen berührungsempfindlichen Bildschirm 30 der in der Mittelkonsole angebracht ist. Bei der Fahrt liegt die Mittelkonsole nicht im Sichtfeld des Fahrers. Deshalb werden die Zusatzinformationen während der Fahrt nicht auf der Anzeigeeinheit 30 eingeblendet.

Der berührungsempfindliche Bildschirm 30 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort zusammengesetzt aus den Worten Information und Entertainment (Unterhaltung). Die Vorrichtung zum Bedienen eines Infotainment-Systems weist im Bereich einer Mittelkonsole des Fahrzeugs 10 eine Anzeigeeinrichtung in Form des berührungsempfindlichen Bildschirms 30, auch als "Touchscreen" bezeichnet, auf, wobei dieser Bildschirm 30 insbesondere von einem Fahrer des Fahrzeugs 10 aber auch von einem Beifahrer des Fahrzeugs 10 gut eingesehen und bedient werden kann. Unterhalb des Bildschirms 30 können zudem mechanische Bedienelemente, beispielsweise Tasten, Drehregler oder Kombinationen hiervon, wie beispielsweise Drückdrehregler, angeordnet sein.

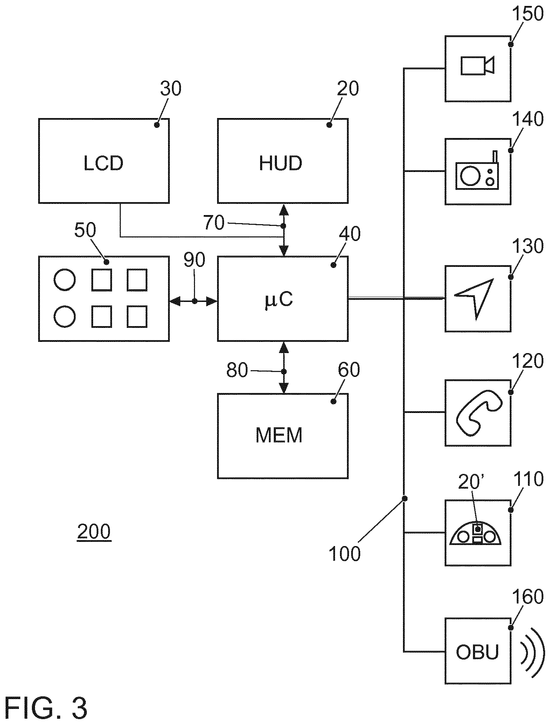

Fig. 3 zeigt schematisch ein Blockschaltbild des Infotainment-Systems 200 sowie beispielhaft einige Teilsysteme oder Applikationen des Infotainment-Systems. Die BedienungsVorrichtung umfasst die berührungsempfindliche Anzeigeeinheit 30, eine Recheneinrichtung 40, eine Eingabeeinheit 50 und einen Speicher 60. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 30 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Mit der Bezugszahl 50 ist eine Eingabeeinheit bezeichnet. Ihr zugehörig sind die schon erwähnten Bedienelemente wie Tasten, Drehregler, Schieberegler, oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion, usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt, mit den Piktogrammen und/oder Symbolen für die möglichen Einblendungen von Zusatzinformationen.

Die weiteren Teile des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie BroadR-Reach in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbilder/s entspricht. Alternativ kann eine Spezialkamera eingesetzt werden, die mehr Bilder/s aufnimmt um die Genauigkeit der Objekterkennung bei sich schneller bewegenden Objekten zu erhöhen. Es können mehrere Kameras zur Umfeldbeobachtung eingesetzt werden. Daneben könnten auch die schon erwähnten RADAR- oder LIDAR-Systeme ergänzend oder alternativ eingesetzt werden um die Umfeldbeobachtung durchzuführen oder zu erweitern. Für die drahtlose Kommunikation nach Innen und Außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard ausgelegt sein. Ebenfalls kann es für WLAN-Kommunikation ausgelegt sein, sei es für die Kommunikation zu Geräten der Insassen im Fahrzeug oder für die Fahrzeug-zu-Fahrzeug Kommunikation, etc.

Das erfindungsgemäße Verfahren zur Einblendung von Zusatzinformationen in das Sichtfeld des Fahrers wird im Folgenden anhand von zwei Ausführungsbeispielen erläutert.

Für die weiteren Figuren gilt, dass gleiche Bezugszahlen die gleichen Felder und Symbole bezeichnen wie bei der Beschreibung der Figuren 1 bis 3 erläutert.

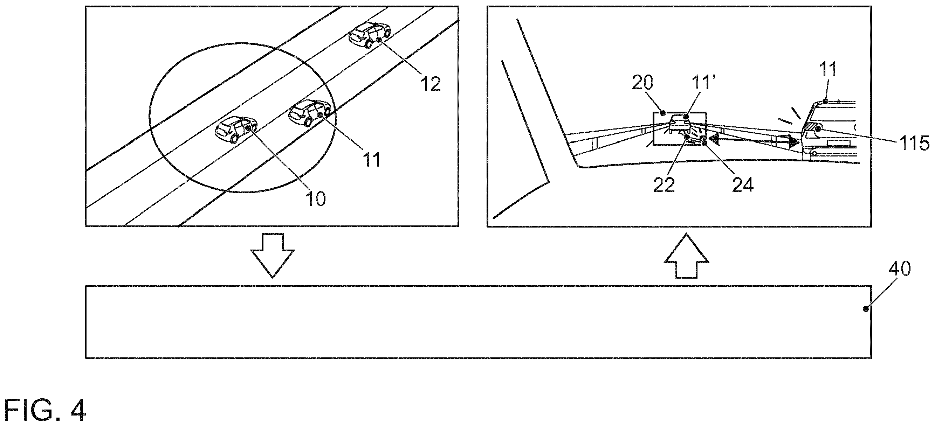

Im linken oberen Teil der Fig. 4 ist die schon bei Fig. 1 beschriebene Fahrsituation von oben dargestellt. Das Fahrzeug 10 welches sich auf einem Fahrstreifen der Kraftfahrstraße oder Autobahn bewegt, ist mit Kamera 150, RADAR- oder LIDAR-System ausgestattet und führt eine Umfeldbeobachtung durch, was durch den Kreis um das Fahrzeug 10 herum angedeutet wird. Rechts neben dem Fahrzeug 10 bewegt sich auf dem Beschleunigungsstreifen das Fahrzeug 11. Vor dem Beobachter-Fahrzeug 10 bewegt sich ein weiteres Fahrzeug 12 auf demselben Fahrstreifen. Im unteren Teil des Bildes ist die Recheneinheit 40 dargestellt. Die von den Sensoren zur Umfeldbeobachtung generierten Daten werden an die Recheneinheit 40 geliefert und darin ausgewertet.

Auch die Frequenz und Phase des Blinkvorgangs bei dem erkannten Fahrzeug 11 wird in der Recheneinheit 40 ausgewertet. Dies ist durch Bildverarbeitung möglich. Der zeitliche Abstand zwischen 2 Bildern, auf denen die Leuchtphase zu sehen ist, kann in der aufgenommenen Video-Sequenz ermittelt werden. Daraus ergibt sich die Frequenz. Um diesen Vorgang zu vereinfachen kann auch mit Näherungswerten gearbeitet werden. Die Blinkfrequenz ist bei Fahrzeugen standardisiert. Sie liegt zwischen 0,8 und 1,25 Hz. Dies kann in der Recheneinheit 40 voreingestellt sein. Dann braucht nur die korrekte Phase ermittelt zu werden.

Als Ergebnis der Auswertung erfolgt die Einblendung von entsprechenden Zusatzinformationen auf dem Head-Up-Display 20. Die resultierende Einblendung ist im rechten Teil der Fig. 4 gezeigt. Auf dem HUD ist ein Fahrzeug 11' dargestellt. Hier kann es sich entweder um ein entsprechendes Piktogramm für einen Pkw handeln oder es handelt sich um ein skaliertes von der Kamera 150 aufgenommenes Bild oder um ein Symbol. Als weiteres Element wird auf der HUD-Anzeige 20 die Trajektorie 22 eingeblendet. Hinzu kommt noch ein blinkendes Element 24. Hier sind verschiedene Ausführungen möglich. In einer Form können einfach Lichtstrahlen einer den typischen Blinkleuchten entsprechenden Farbe eingeblendet werden. In einer anderen Form wird entweder die Trajektorie 22 oder das dargestellte Fahrzeug 11 oder beides oder abwechselnd beides blinkend dargestellt. Durch diese Form der Darstellung entsteht eine optische Verknüpfung durch den realen Blinkvorgang bei dem Fahrzeug 11 im Sichtfeld und der synchron blinkenden Darstellung auf der HUD 20. Diese Form der Darstellung wird hier auch als umweltsynchrone optische Hervorhebung / Verknüpfung bezeichnet.

Insbesondere die Synchronisation mit Blinklichtern scheint in diesem Zusammenhang zielführend, weshalb im Folgenden der Anwendungsfall einer zu Fahrtrichtungsanzeigern/Blinkern synchronen Anzeige dargestellt wird. Die synchrone (pulsierende/blinkende) Anzeige von HUD-Elementen (oder Anzeigen generell) auf Basis einer aktiven Erfassung des Fahrtrichtungsanzeigers/Blinklichts eines anderen Fahrzeugs ist somit der prototypische Anwendungsfall. Generell kann das System jedoch auf jedes erfassbares Objekt mit einer für den Menschen wahrnehmbaren Darstellungsfrequenz übertragen werden (Ampeln, Blaulicht, Parkleitsysteme etc.). Durch die zum "Blinken" eines umgebenden Fahrzeugs synchrone Anzeige, wird dem Fahrer die Verknüpfung von HUD-Inhalt (oder Anzeigen generell) und korrespondierendem Fahrzeug erleichtert. Dem Fahrzeugführer wird klar, auf welches Fahrzeug sich die Darstellung in seinem HUD bzw. seiner Anzeige bezieht. Abbildung 3 zeigt ein entsprechendes Beispiel.

Die Anzeigeelemente müssen dabei nicht zwangsläufig im Takt des Referenzobjektes komplett erscheinen und verschwinden, sondern können auch nur leicht pulsieren oder andersartig betont werden (Größe, Farbe., Helligkeit, etc.) Ob die dargestellten Anzeigeelemente selbst den Takt / die Frequenz übernehmen, oder ob naheliegende Elemente (im HUD oder im Fahrzeuginnenraum) die Frequenz übernehmen ist ebenso variabel. Diese Möglichkeit ist nicht Teil der Erfindung.

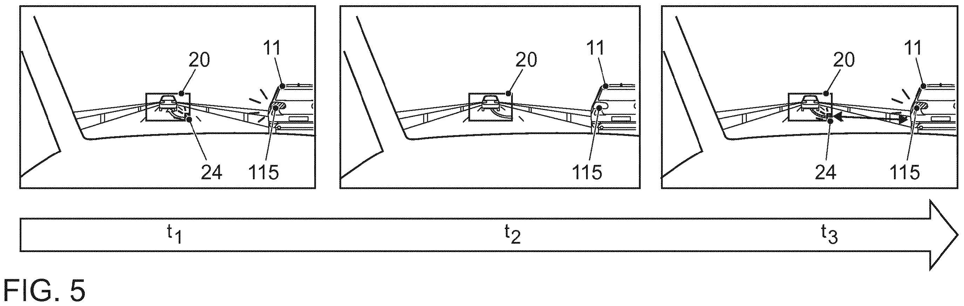

Fig. 5 zeigt jetzt den zeitlichen Ablauf der umweltsynchronen Darstellung auf dem HUD 20. Der Zeitstrahl ist im unteren Teil des Bildes dargestellt. Im oberen, linken Bild ist das Sichtfeld des Fahrers des Fahrzeuges 10 zu einem ersten Zeitpunkt t₁ dargestellt. Dort ist zu sehen, dass die Blinkleuchte 115 des Fahrzeuges 11 leuchtet. Gleichzeitig leuchtet das blinkende Element 24 auf dem HUD 20. Im oberen, mittleren Bild ist das Sichtfeld des Fahrers in der darauf folgenden Phase zum Zeitpunkt t₂ gezeigt, in der das Blinklicht 115 nicht leuchtet. Dementsprechend ist das blinkende Element 24 auf dem HUD 20 nicht gezeigt. Im oberen, rechten Bild ist das Sichtfeld des Fahrers des Fahrzeuges 10 zu einem dritten Zeitpunkt t₃ dargestellt. Es gilt t₃>t₂>t₁. Dort ist zu sehen, dass die Blinkleuchte 115 des Fahrzeuges 11 wieder leuchtet. Gleichzeitig ist auch wieder das blinkende Element 24 auf dem HUD 20 eingeblendet.

Durch die zur Blinkleuchte 115 synchrone Anzeige von HUD-Inhalten wird die Verknüpfung zum korrespondierenden Fahrzeug 11 verdeutlicht. Dem Fahrer wird klar, dass sich die Trajektorie 22, die auf seinem HUD 20 dargestellt ist, sich auf das blinkende Fahrzeug 11 neben ihm bezieht.

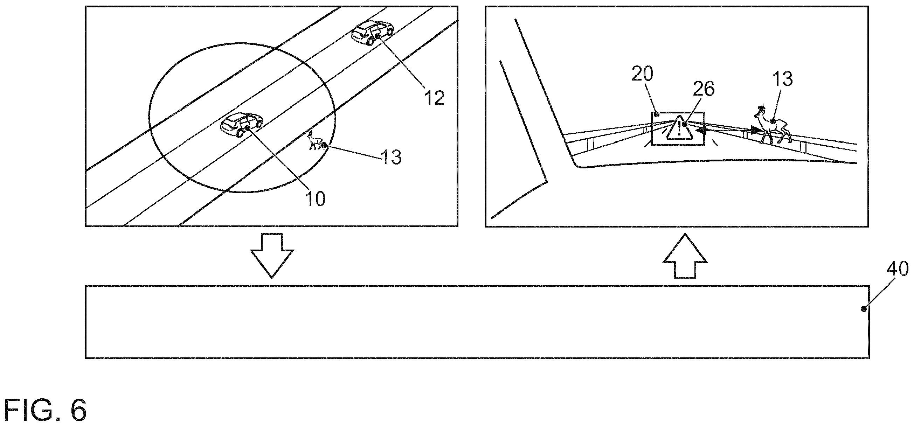

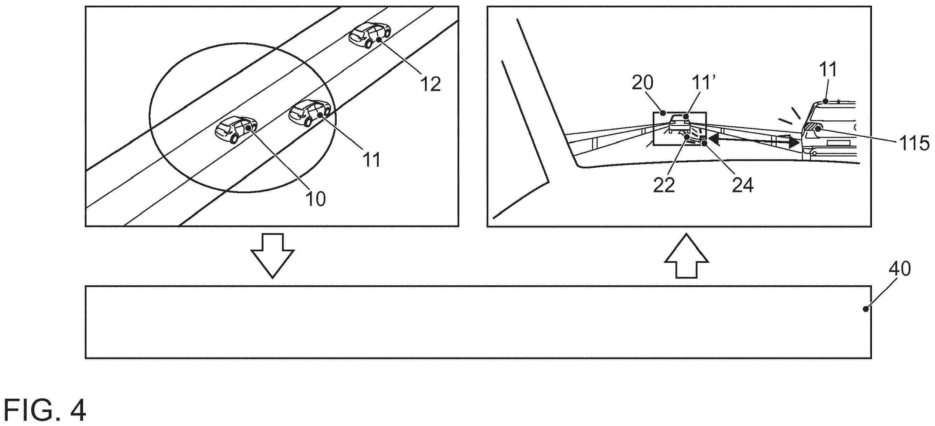

In der Fig. 6 ist jetzt noch ein zweites Ausführungsbeispiel für eine umweltsynchrone Hervorhebung von Bildinhalten zu sehen. Das linke, obere Bild zeigt eine Fahrsituation, wo das Fahrzeug 10 sich auf seiner Fahrspur bewegt. Am rechten Fahrbahnrand steht ein Reh 13, das von der Umfeldbeobachtung des Fahrzeuges 10 erkannt wird. Die Recheneinheit 40 führt eine Auswertung der Objekterkennung durch und stuft das Reh 13 als potentielle Gefahr ein. Sie erzeugt eine Warnmeldung, die auf dem HUD 20 angezeigt wird. Die Warnmeldung sieht in dem gezeigten Fall so aus, dass ein Warnsymbol 26 eingeblendet wird. Um den Bezug zum erkannten Objekt 13 herzustellen, wird die Warnmeldung pulsierend dargestellt. Da Tiere häufig in der Dunkelheit am Fahrbahnrand stehen, wird in dieser Ausführungsform der rechte Fahrbahnrand durch die Beleuchtungseinrichtung des Fahrzeuges pulsierend beleuchtet. Das kann z.B. mit dem Kurvenlicht geschehen. Moderne Fahrzeuge werden heute oft mit Matrix-LED-Leuchten ausgestattet. Spezielle Segmente dieser Matrix-Leuchte können dafür vorgesehen sein das Objekt am Straßenrand zu beleuchten. Das Pulsieren des Warnsymbols 26 findet synchron zum pulsierenden Beleuchten des Rehs 13 statt um den Bezug der Warnmeldung zum realen Objekt herzustellen.

Zusammenfassend wird hier noch erwähnt, dass für das Verfahren drei Komponenten zusammenspielen, welche in Fig. 3 dargestellt sind. Zum einen die Umfeldbeobachtung mit Kamera 150 und die Recheneinheit 40, welche die Frequenzen der Referenzobjekte in der Umwelt erfassen muss oder bereitgestellt bekommen muss. Darauf basierend kann dann die Recheneinheit 40 die Zusatzinformationen mit den Frequenzdaten verrechnen und entsprechende Anzeigeelemente 20, 20' ansteuern. Die Anzeigeelemente 20, 20' müssen eine synchrone Darstellung bzw. optische Betonung von Inhalten ermöglichen, was bei den Anzeigeeinheiten basierend auf LCD, OLED-Panels, wie auch anderen Matrix-Display gegeben ist.

Es wird noch darauf hingewiesen, dass die in den Ausführungsbeispielen erwähnten erkannten relevanten Objekte in der Umwelt (Fahrzeug 11 und Tier (Reh) 13) nur zwei Beispiele von vielen möglichen Objekten sind.

Die Objekterkennung kann für viele verschiedene Objekte ausgelegt sein. Als weitere Beispiele werden genannt am Fahrbahnrand aufgestellte oder fest installierte Baken die mit Warnleuchten versehen sind, aufgestellte Warnlampen oder Warnschilder, Lkws, Polizei-Fahrzeuge, Feuerwehr-Fahrzeuge, Krankenwagen, Schwertransporte, Omnibusse, landwirtschaftliche Fahrzeuge, Baumaschinen, Fahrräder, Motorräder, Roller, Fußgänger. Bei Lkws ist es für die Zukunft geplant, dass sie mit Anzeigepanels ausgestattet werden.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste

- 10: Beobachter-Fahrzeug
- 11: Fahrzeug
- 12: vorausfahrendes Fahrzeug
- 13: erkanntes Objekt
- 20: Head-Up Display HUD
- 20': Anzeigeeinheit
- 22: Trajektorie
- 24: blinkendes Element
- 26: Warnsymbol
- 30: berührungsempfindliche Anzeigeeinheit
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: Datenbus
- 110: Kombiinstrument
- 115: Blinkleuchte
- 120: Telefon
- 130: Navigationsgerät
- 140: Radio
- 150: Kamera
- 160: Kommunikationsmodul
- 200: Infotainment-System

## Patentansprüche

1. Verfahren zum Anreichern des Sichtfeldes eines Fahrers eines Fahrzeuges (10) mit Zusatzinformationen, bei dem die Zusatzinformationen über eine Anzeigeeinheit (20, 20'), insbesondere ein Head-Up Display dargestellt werden, wobei eine Umfeldbeobachtung des Fahrzeuges (10) erfolgt und wenn seitens der Umfeldbeobachtung ein relevantes Objekt (11, 13) mit einem Bedeutungspotential erkannt wurde, auf der Anzeigeeinheit (20, 20') das relevante Objekt (11, 13) dargestellt wird und der Zusammenhang zum realen Objekt (11, 13) im Sichtfeld des Fahrers dadurch betont wird, dass das dargestellte Objekt (11') umweltsynchron zu dem realen Objekt (11, 13) optisch hervorgehoben wird, **dadurch gekennzeichnet, dass** für den Fall, dass das relevante Objekt (11, 13) ein Fahrzeug betrifft, und das Fahrzeug (11) mit einer aktivierten Blinkleuchte (115) ankündigt, dass die Absicht besteht, die Fahrspur zu wechseln, das dargestellte Objekt (11') ebenfalls blinkend dargestellt wird, wobei der Blinkvorgang synchron zu dem Blinkvorgang des realen Objektes (11) erfolgt, wobei zusätzlich eine vorausberechnete Trajektorie (22) für das relevante Objekt (11) auf der Anzeigeeinheit (20) dargestellt wird, und wobei zusätzlich die dargestellte Trajektorie (22) synchron blinkend dargestellt wird oder statt des dargestellten Objektes (11') die dargestellte Trajektorie (22) des Objektes synchron blinkend dargestellt wird oder das dargestellte Objekt (11') und die dargestellte Trajektorie (22) abwechselnd blinkend dargestellt werden.

2. Verfahren nach Anspruch 1, wobei zur Umfeldbeobachtung ein oder mehrere Kameras (150) und/oder ein RADAR- oder LIDAR-Sensor eingesetzt werden, und bei den aufgenommenen Bildern eine Objekterkennung durchgeführt wird.

3. Verfahren nach Anspruch 2, wobei bei der Objekterkennung eine Anzahl Bilder ausgewertet werden um bei einem erkannten blinkenden Fahrzeug (11) die Blinkfrequenz zu ermitteln.

4. Verfahren nach einem der vorhergehenden Ansprüche, wobei das Objekt als Symbol (26) oder Piktogramm (24) dargestellt wird.

5. Verfahren nach nach einem der vorhergehenden Ansprüche, wobei dem Fahrzeug (10) die Blinkfrequenz und/oder die Phase des Blinkvorgangs bei dem erkannten Fahrzeug (11) über eine Fahrzeug-zu-Fahrzeug-Kommunikation in einer oder mehreren Umwelt-Synchronisations-Botschaften mitgeteilt wird.

6. Verfahren nach einem der vorhergehenden Ansprüche, wobei für den Fall, dass es sich bei dem erkannten Objekt um ein lebendes Tier oder ein Objekt ohne ansteuerbare Anzeigeeinheit oder ansteuerbare Beleuchtung oder Blinklicht handelt, eine optische Betonung des realen Objektes (13) dadurch erfolgt, dass das Objekt (13) mittels einer Beleuchtungseinrichtung des Fahrzeuges (10) blinkend oder pulsierend angestrahlt wird.

7. Vorrichtung zur Verwendung in einem Beobachter-Fahrzeug bei dem Verfahren nach einem der vorhergehenden Ansprüche, aufweisend eine Anzeigeeinheit (20, 20') auf der die Zusatzinformationen dargestellt werden, und eine oder mehrere Kameras (150) und/oder RADAR- oder LIDAR-Sensor zur Umfeldbeobachtung, sowie eine Recheneinheit (40) zur Auswertung einer Anzahl von aufgenommenen Bildern zur Objekterkennung und zur Berechnung einer Einblendung des erkannten Objektes (11, 13) auf der Anzeigeeinheit (20, 20'), wenn festgestellt wurde, dass das erkannte Objekt (11, 13) ein Bedeutungspotential darstellt, wobei die Recheneinheit (40) die Einblendung so berechnet, dass der Zusammenhang zum realen Objekt (11, 13) im Sichtfeld des Fahrers dadurch betont wird, dass das dargestellte Objekt (11') umweltsynchron zu dem realen Objekt (11, 13) optisch hervorgehoben wird, wobei für den Fall, dass das erkannte Objekt (11, 13) ein Fahrzeug betrifft, und das Fahrzeug (11) mit einer aktivierten Blinkleuchte (115) ankündigt, dass die Absicht besteht, die Fahrspur zu wechseln, die Recheneinheit zur Berechnung der Einblendung ausgelegt ist, das erkannte Objekt (11, 13) ebenfalls blinkend darzustellen, wobei der Blinkvorgang synchron zu dem Blinkvorgang des realen Objektes (11, 13) erfolgt, wobei die Recheneinheit (40) zusätzlich eine Vorausberechnung einer Trajektorie (22) für das relevante Objekt (11, 13) vornimmt, die auf der Anzeigeeinheit (20) dargestellt wird, und wobei zusätzlich die dargestellte Trajektorie (22) synchron blinkend dargestellt wird oder statt des dargestellten Objektes (11') die dargestellte Trajektorie (22) des Objektes synchron blinkend dargestellt wird oder das dargestellte Objekt (11') und die dargestellte Trajektorie (22) abwechselnd blinkend dargestellt werden.

8. Vorrichtung nach Anspruch 7, weiterhin aufweisend ein Kommunikationsmodul (160) über das der Vorrichtung die Blinkfrequenz und/oder die Phase des Blinkvorgangs bei dem erkannten Objekt (11, 13) über eine X-zu-Fahrzeug-Kommunikation in einer oder mehreren Umwelt-Synchronisations-Botschaften mitgeteilt wird.

9. Vorrichtung nach Anspruch 7 oder 8, wobei das Objekt als Symbol (26) oder Piktogramm (24) dargestellt wird.

10. Vorrichtung nach einem der Ansprüche 7 bis 9, weiterhin aufweisend eine Beleuchtungsvorrichtung, die für den Fall, dass es sich bei dem erkannten Objekt (11, 13) um ein lebendes Tier oder ein Objekt ohne ansteuerbare Anzeigeeinheit oder ansteuerbares Blinklicht handelt, eine optische Betonung des erkannten Objektes (13) dadurch bewirkt, dass das erkannte Objekt (13) mittels der Beleuchtungsvorrichtung blinkend oder pulsierend angestrahlt wird.

11. Kraftfahrzeug, **dadurch gekennzeichnet, dass** das Kraftfahrzeug (10) eine Vorrichtung nach einem der Ansprüche 7 bis 10 aufweist.

## Claims

1. A method for enriching a field of view of a driver of a vehicle (10) with additional information, wherein the additional information is shown via a display unit (20, 20'), particularly a head-up display, wherein area monitoring of the vehicle (10) occurs and if a relevant object (11, 13) with significant potential was detected by the area monitoring, the relevant object (11, 13) is shown on the display unit (20, 20') and the relation to the actual object (11, 13) in the field of view of the driver is so emphasised that the shown object (11') is highlighted optically synchronously with the environment to the actual object (11, 13), **characterized in that** if the relevant object (11, 13) relates to a vehicle, and the vehicle (11) announces with an activated indicator light (115) that the intention exists of changing the driving lane, the shown object (11') is also shown flashing, wherein the flashing process occurs synchronously with the flashing process of the real object (11), wherein additionally a trajectory (22) calculated in advance for the relevant object (11) is shown on the display unit (20) and wherein additionally the shown trajectory (22) is shown flashing synchronously or instead of the shown object (11') the shown trajectory (22) of the object is shown flashing synchronously or the shown object (11') and the shown trajectory (22) are shown flashing alternately.

2. The method according to claim 1, wherein one or more cameras (150) and/or a RADAR- or LIDAR sensor are used for area monitoring, and object detection is performed on the pictures taken.

3. The method according to claim 2, wherein in the object detection a number of pictures are evaluated in order to detect the flashing frequency in a detected flashing vehicle (11).

4. The method according to one of the preceding claims, wherein the object is shown as a symbol (26) or pictogram (24).

5. The method according to one of the preceding claims, wherein the vehicle (10) is apprised of the flashing frequency and/or the step of the flashing process in the detected vehicle (11) via a vehicle-to-vehicle communication in one or more environment synchronization messages.

6. The method according to one of the preceding claims, wherein if the detected object is a living animal or an object without an actuatable display unit or actuatable illumination or flashing light, optical emphasis of the actual object (13) occurs by the object (13) being spotlighted by an illuminating device of the vehicle (10) in a flashing or pulsating manner.

7. A device for use in an observers' vehicle with the method according to one of the preceding claims, having a display unit (20, 20') on which the additional information is shown, and one or more cameras (150) and/or RADAR- or LIDAR sensors for area monitoring, and a computing unit (40) for evaluating a number of pictures taken to detect an object and calculate an insertion of the detected object (11, 13) on the display unit (20, 20'), if it was established that the detected object (11, 13) has a significant potential, wherein the computing unit (40) so calculates the insertion that the relation to the actual object (11, 13) is emphasised in the field of view of the driver through the shown object (11') being optically highlighted synchronously with the actual object (11, 13) in the environment, wherein if the detected object (11, 13) relates to a vehicle and the vehicle (11) announces with an activated indicator light (115) that the intention exists of changing the driving lane, the computing unit for calculating the insertion is designed to show the detected object (11, 13) also flashing, wherein the flashing process occurs synchronously with the flashing process of the real object (11, 13), wherein the computing unit (40) additionally performs an advance calculation of a trajectory (22) for the relevant object (11, 13) that is shown on the display unit (20), and wherein additionally the shown trajectory (22) is shown flashing synchronously or instead of the shown object (11') the shown trajectory (22) of the object is shown flashing synchronously or the shown object (11') and the shown trajectory (22) are shown flashing alternately.

8. The device according to claim 7, further having a communication module (160) via which the device is apprised of the flashing frequency and/or the step of the flashing process in the detected object (11, 13) via an X-to-vehicle communication in one or more environment synchronization messages.

9. The device according to claim 7 or 8, wherein the object is shown as a symbol (26) or pictogram (24).

10. The device according to one of claims 7 to 9, further having an illuminating device, that, if the detected object (11, 13) is a living animal or an object without an actuatable display unit or actuatable indicator light, causes optical emphasis of the detected object (13) through the detected object (13) being spotlighted in a flashing or pulsating manner by means of the illuminating device.

11. A motor vehicle **characterized in that** the motor vehicle (10) has a device according to one of claims 7 to 10.

## Revendications

1. Procédé d'enrichissement du champ de vision d'un conducteur d'un véhicule (10) avec des informations additionnelles, dans lequel les informations additionnelles sont représentées via une unité d'affichage (20, 20'), en particulier un affichage Head-Up, dans lequel une observation du contexte du véhicule (10) a lieu et si un objet pertinent (11, 13) ayant un potentiel significatif a été détecté par l'observation du contexte, l'objet pertinent (11, 13) est représenté sur l'unité d'affichage (20, 20') et la relation avec l'objet réel (11, 13) est ainsi accentuée dans le champ de vision du conducteur, en ce que l'objet représenté (11') est mis en évidence optiquement en synchronisme avec l'environnement avec l'objet réel (11, 13), **caractérisé en ce que**, dans le cas où l'objet pertinent (11, 13) concerne un véhicule et le véhicule (11) avec un feu clignotant activé (115) annonce que l'intention est de changer la voie de circulation, l'objet représenté (11') est également représenté clignotant, le processus de clignotement se déroulant en synchronisme avec le processus de clignotement de l'objet réel (11), une trajectoire précalculée (22) pour l'objet pertinent (11) étant de plus représentée sur l'unité d'affichage (20), et la trajectoire représentée (22) étant de plus représentée en synchronisme clignotant ou, à la place de l'objet représenté (11'), la trajectoire représentée (22) de l'objet est représentée en synchronisme clignotant ou l'objet représenté (11') et la trajectoire représentée (22) sont représentés clignotant en alternance.

2. Procédé selon la revendication 1, dans lequel une ou plusieurs caméras (150) et/ou un capteur RADAR ou LIDAR sont utilisés pour l'observation du contexte, et dans les images enregistrées est effectuée une détection d'objet.

3. Procédé selon la revendication 2, dans lequel, pendant la détection d'objet, un certain nombre d'images sont évaluées pour déterminer la fréquence de clignotement au niveau d'un véhicule clignotant détecté (11).

4. Procédé selon l'une des revendications précédentes, dans lequel l'objet est représenté sous la forme d'un symbole (26) ou d'un pictogramme (24).

5. Procédé selon l'une des revendications précédentes, dans lequel la fréquence de clignotement et/ou la phase du processus de clignotement dans le véhicule détecté (11) sont communiquées au véhicule (10) via une communication de véhicule à véhicule dans un ou plusieurs messages de synchronisme environnemental.

6. Procédé selon l'une des revendications précédentes, dans lequel, dans le cas où l'objet détecté est un animal vivant ou un objet sans unité d'affichage contrôlable ni éclairage contrôlable ou feu clignotant, une accentuation optique de l'objet réel (13) a lieu en ce que l'objet (13) est rayonné de manière clignotante ou pulsante au moyen d'un dispositif d'éclairage du véhicule (10).

7. Dispositif destiné à être utilisé dans un véhicule observateur dans le procédé selon l'une des revendications précédentes, comportant une unité d'affichage (20, 20') sur laquelle sont représentées les informations additionnelles, et une ou plusieurs caméras (150) et/ou un capteur RADAR ou LIDAR pour observer le contexte, ainsi qu'une unité de calcul (40) pour évaluer un certain nombre d'images enregistrées en vue de la détection de l'objet et pour calculer une superposition de l'objet détecté (11, 13) sur l'unité d'affichage (20, 20'), s'il a été déterminé que l'objet détecté (11, 13) représente un potentiel significatif, l'unité de calcul (40) calculant la superposition de telle sorte que la relation avec l'objet réel (11, 13) dans le champ de vision du conducteur soit accentuée par le fait que l'objet représenté (11') est mis en évidence optiquement en synchronisme avec l'environnement avec l'objet réel (11, 13) et dans le cas où l'objet détecté (11, 13) concerne un véhicule et le véhicule (11) avec un feu clignotant activé (115) annonce que l'intention est de changer la voie de circulation, l'unité de calcul est conçue pour calculer la superposition, pour représenter l'objet détecté (11, 13) également clignotant, le processus de clignotement ayant lieu en synchronisme avec le processus de clignotement de l'objet réel (11, 13), dans lequel l'unité de calcul (40) effectue de plus un précalcul d'une trajectoire (22) pour l'objet pertinent (11, 13), qui est représenté sur l'unité d'affichage (20), et dans lequel la trajectoire représentée (22) est de plus représentée en synchronisme clignotant ou, à la place de l'objet représenté (11'), la trajectoire représentée (22) de l'objet est représentée en synchronisme clignotant ou l'objet représenté (11') et la trajectoire représentée (22) sont représentés clignotant en alternance.

8. Dispositif selon la revendication 7, comportant en outre un module de communication (160) par l'intermédiaire duquel la fréquence de clignotement et/ou la phase du processus de clignotement dans l'objet détecté (11, 13) est communiquée au dispositif via une communication X vers véhicule dans un ou plusieurs messages de synchronisme environnemental.

9. Dispositif selon la revendication 7 ou 8, dans lequel l'objet est représenté sous la forme d'un symbole (26) ou d'un pictogramme (24).

10. Dispositif selon l'une des revendications 7 à 9, comportant en outre un dispositif d'éclairage qui, dans le cas où l'objet détecté (11, 13) est un animal vivant ou un objet sans unité d'affichage contrôlable ou un feu clignotant contrôlable, provoque une accentuation optique de l'objet détecté (13) ainsi que l'objet détecté (13) est rayonné de manière clignotante ou pulsante au moyen du dispositif d'éclairage.

11. Véhicule automobile **caractérisé en ce que** le véhicule automobile (10) comporte un dispositif selon l'une des revendications 7 à 10.
